# EUROPEAN PATENT APPLICATION

(11) **EP 4 585 439 A1**
(43) Date of publication of application: **16.07.2025**
(21) Application number: 24151777.0
(22) Date of filing: 15.01.2024
(51) Int. Cl.: B60K 1/04

(54) **A VEHICLE BRACKET ARRANGEMENT**

(71) Applicant: VOLVO TRUCK CORPORATION, 405 08 Göteborg (SE)
(72) Inventor: LANDVIK, Sondre, 417 61 GÖTEBORG (SE); RAGOT, Sébastien, 413 11 GÖTEBORG (SE)
(74) Representative: Kransell & Wennborg KB

(57) **Abstract**

The present disclosure relates to a vehicle bracket arrangement for suspending a protection plate for an energy storage system, the vehicle bracket arrangement comprising a bracket comprising a bracket cavity, and a bushing arrangement comprising a first part arranged in, and rotationally fixed to, the bracket cavity, the first part comprising a central cavity, a second part arranged in the central cavity of the first part, and a third part arranged in the second part, wherein the third part comprises an aperture configured to receive a fastener element for connecting a protection plate to the bracket.

## Description

### TECHNICAL FIELD

The disclosure relates generally to suspension of energy storage systems. In particular aspects, the disclosure relates to a vehicle bracket arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage systems, often in the form of traction batteries, need to be relatively large in size to be able to contain a sufficient level of energy such that the vehicle can be operated at an acceptable range using the electric traction motors. The large energy storage systems are in turn of substantial weight, and there is a challenged to position and assemble these energy storage systems to the frame of the heavy duty vehicle.

Further, by positioning the energy storage system to the frame, the energy storage systems may be exposed to external loads, and it is therefore also a challenge to protect the vulnerable energy storage systems from impacts of such external loads.

### SUMMARY

According to a first aspect of the disclosure, there is provided a vehicle bracket arrangement for suspending a protection plate for an energy storage system, the vehicle bracket arrangement comprising a bracket comprising a bracket cavity, and a bushing arrangement comprising a first part arranged in, and rotationally fixed to, the bracket cavity, the first part comprising a central cavity, a second part arranged in the central cavity of the first part, and a third part arranged in the second part, wherein the third part comprises an aperture configured to receive a fastener element for connecting a protection plate to the bracket.

The first aspect of the disclosure may seek to improve the interface for connecting a protection plate to a bracket which bracket in turn may preferably be connected, directly or indirectly, to a frame of the vehicle. The protection plate may also be referred to as a crash protection plate. By connecting the bushing arrangement in the bracket cavity of the bracket, a compact interface to connect the protection plate can be obtained. Also, providing a bushing arrangement with three parts arranged in the bracket cavity, a less stiff interface can be obtained where the bushing arrangement allows for a relative movement between the protection plate and the frame of the vehicle when the bracket arrangement is connected to the frame of the vehicle and to the protection plate. In turn, an energy storage system, directly or indirectly, connected to the bracket arrangement, as well as additional brackets arranged between the protection plate and the frame of the vehicle are allowed to flex, thereby reducing joint forces between substantially all parts of a frame structure suspending the energy storage system to the frame of the vehicle. The reduced joint forces will in turn reduce stresses in the frame of the vehicle as well as stresses in the energy storage system since forces from the frame of the vehicle will, more or less, not be transferred to the energy storage system. Also, the first, second and third parts should be construed as three separate parts, wherein the second part may be rotationally fixed to the first part.

Optionally in some examples, including in at least one preferred example, the first part of the bushing arrangement comprises a first abutment portion arranged in abutment with a bracket abutment portion of the bracket cavity. A technical benefit may be that the first part is securely connected to the bushing cavity via the first abutment portion and the bracket abutment portion, thereby preventing the first part from rotating within the bracket cavity.

Optionally in some examples, including in at least one preferred example, the first abutment portion and the bracket abutment portion is a respective oblong shaped portion. A technical benefit may include that the straight sides of the oblong shaped portion may prevent rotation of the first part inside the bushing cavity. In addition, the oblong shape enables for the bracket cavity to be arranged in a relatively thin part of the bracket.

Optionally in some examples, including in at least one preferred example, the oblong shaped portion of the first abutment portion comprises a pair of semi-circular surfaces and a pair of straight surfaces each arranged between the pair of semi-circular surfaces.

Optionally in some examples, including in at least one preferred example, a maximum distance between the pair of semi-circular surfaces is larger than a distance between the pair of straight surfaces. A technical benefit may include, as also indicated above, that the bracket cavity can be arranged in a relatively thin portion of the bracket. This may in turn allow for larger energy storage systems to be connected to the vehicle, whereby more energy can be made available for the electric traction motor(s) propelling the vehicle.

Optionally in some examples, including in at least one preferred example, the first abutment portion comprises at least one protruding clip portion arranged in a groove portion of the bracket abutment portion. A technical benefit may include that the first part can be snap-fitted to the bracket cavity. Axial displacement of the first part from the bracket cavity may hereby be prevented. Also, an operator may be provided with a tactile indication that the first part is correctly inserted in the bracket cavity.

Optionally in some examples, including in at least one preferred example, the at least one protruding clip portion is arranged on at least one of the semi-circular surfaces of the first abutment portion.

Optionally in some examples, including in at least one preferred example, the third part comprises a protruding portion, the protruding portion protrudes from a side surface of the second part in a direction away from the first part.

Optionally in some examples, including in at least one preferred example, the protruding portion of the third part comprises an end portion having a chamfered shape.

Optionally in some examples, including in at least one preferred example, the vehicle bracket arrangement further comprises a guiding element connectable to the protection plate, wherein the guiding element is configured to at least partly enclose the protruding portion of the third part when the protection plate is connected to the bracket. A technical benefit may include that an interface to the protection plate may be further improved. In particular, with the chamfered shaped end portion of the third part, a simplified guiding of the guiding element to the protruding portion may be obtained.

Optionally in some examples, including in at least one preferred example, the third part is arranged in the second part at a central position of the second part.

Optionally in some examples, including in at least one preferred example, the second part is vulcanized to the third part. A technical benefit may include that the first and second parts can be securely fixated to each other.

Optionally in some examples, including in at least one preferred example, the first, second and third parts are made from different material.

Optionally in some examples, including in at least one preferred example, the first part is made from a plastic material, the second part is made from a rubber material and the third part is made from a metallic material. A technical benefit may include that the rubber material of the second part may advantageously absorb loads generated in the busing arrangement during operation of the vehicle. For example, the rubber material may advantageously absorb loads and allow for larger deformation of the entire frame structure suspending the energy storage system to the frame of the vehicle that may occur during operation of the vehicle.

Optionally in some examples, including in at least one preferred example, the aperture of the third part comprises a threaded portion to which a threaded fastener element is connectable. A technical benefit may include that a simple threaded fastener, such as e.g. a screw, can be used for connecting the protection plate to the bracket arrangement via the busing arrangement.

Optionally in some examples, including in at least one preferred example, the bracket comprises an elongated portion extending between a first end portion and a second end portion, wherein the bracket cavity is arranged at the first end portion of the elongated portion.

Optionally in some examples, including in at least one preferred example, the bracket further comprises a second bracket cavity arranged at the second end portion, wherein a second bushing arrangement is arranged in the second bracket cavity. A technical benefit may include that a further improved connection of the protection plate can be obtained.

Optionally in some examples, including in at least one preferred example, the second part comprises a second abutment portion arranged in abutment with a surface of the first part. A technical benefit may be that the second part is securely connected to the first part via the second abutment portion and the surface of the first part, thereby preventing the second part from rotating within the first part.

Optionally in some examples, including in at least one preferred example, the second abutment portion is arranged on a plurality of radially protruding portions of the second part. A technical benefit may include that an improved resistance to twist loads may be obtained.

According to a second aspect, there is provided a frame structure for suspending an energy storage system of a vehicle, the frame structure comprising an energy storage supporting bracket configured to suspend an energy storage system, the energy storage supporting bracket comprises a frame connecting surface connectable to a frame of the vehicle, and a vehicle bracket arrangement according to any one of the examples described above in relation to the first aspect, wherein the bracket is connected to the energy storage supporting bracket at an opposite position of the frame structure compared to the frame connecting surface.

The second aspect of the disclosure may seek to provide a frame structure that can securely suspend an energy storage system which is provided with an interface that can suspended a protection plate in a reliable manner. A technical benefit may include that twisting of the frame structure and the frame of the vehicle can be allowed without causing too high stress concentrations in the interface to the protection plate, as well as in other interfaces, such as interfaces between the frame structure and the energy storage system, thereby reducing joint forces between substantially all parts of the frame structure, and in turn also stresses in the assembly.

Optionally in some examples, including in at least one preferred example, the third part of the bushing arrangement protrudes in a direction opposite to a direction of a normal vector of the frame connecting surface.

Optionally in some examples, including in at least one preferred example, the frame structure further comprises a protection plate and a fastener element connecting the protection plate to the bracket via the third part of the bushing arrangement.

Further effects and features of the second aspect are largely analogous to those described above in relation to the first aspect.

According to a third aspect, there is provided a vehicle, comprising a vehicle bracket arrangement according to any one of the examples described above in relation to the first aspect, or a frame structure according to any one of the examples described above in relation to the second aspect.

Effects and features of the third aspect are largely analogous to those described above in relation to the first and second aspects.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a frame structure for suspending an energy storage system according to an example,
Figs. 3 - 4 are exemplary illustrations of a bracket and a bushing arrangement of a vehicle bracket arrangement according to examples,
Fig. 5 - 7 are exemplified schematic illustrations of the interface between the vehicle bracket arrangement and a protection plate, and
Fig. 8 is an exemplary illustration of a guiding element connected to the protection plate according to an example.

### DETAILED DESCRIPTION

The detailed description set forth below provides information and examples of the disclosed technology with sufficient detail to enable those skilled in the art to practice the disclosure.

The following disclosure aims at improving the interface for connecting a protection plate to a bracket which bracket in turn may preferably be connected, directly or indirectly, to a frame of the vehicle. In particular, a less stiff interface may be provided, whereby the frame structure suspending an energy storage system is allowed to flex without causing high stress and tension.

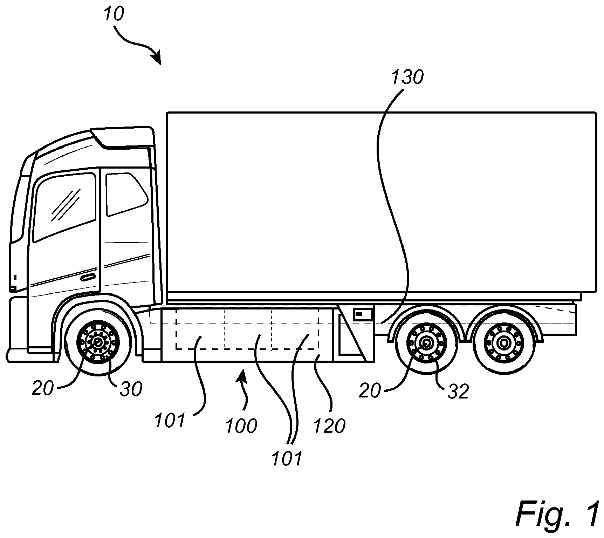

Turning to Fig. 1, which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft. The at least one electric traction motor 20 is configured to apply a propulsive power to the wheels of the vehicle during propulsion, and to generate electric power during braking.

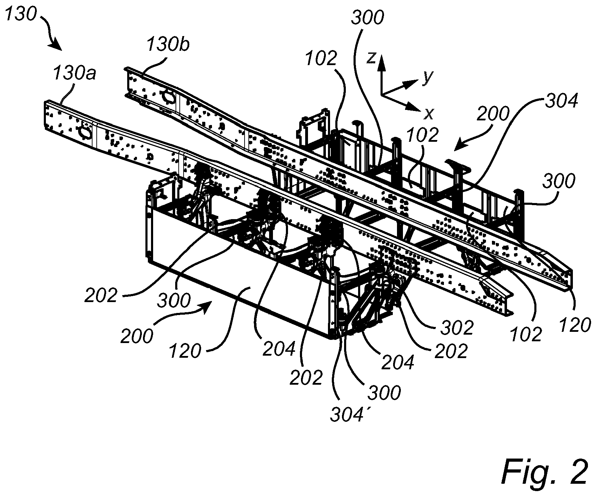

The vehicle further comprises an energy storage system 100, which may also be referred to as a high-voltage vehicle battery. The energy storage system 100 is exemplified as comprising a plurality of energy storage modules 101, also referred to as battery modules and in Fig. 1 exemplified as three energy storage modules 101. The energy storage system 100 is configured to feed electric power to the electric traction motor 20 during propulsion of the vehicle 10 and to receive electric power during braking. The vehicle 10 comprises a protection plate 120 at a lateral outer end position of the energy storage system 100 to protect the relatively vulnerable energy storage system 100 against external loads. As will be evident from the below description, the energy storage system 100 is connected to the frame 130 of the vehicle 10 by a frame structure. In order to describe the suspension of the energy storage system 100 to the frame 130 of the vehicle 10, reference is now made to Fig. 2.

Turning to Fig. 2 which is an exemplary illustration of the frame structure 200 for suspending the energy storage system 100 according to an example. In Fig. 2, the energy storage modules 101 is omitted for presenting further details of the frame structure 200. However, each of the plurality of energy storage modules 101 is configured to be positioned in a respective compartment 102. Also, the above described frame 130 of the vehicle 10 is in Fig. 2 exemplified as comprising frame rails 130a, 130b extending in the longitudinal direction (the X-direction) of the vehicle 10. The frame structure 200 for supporting the energy storage system 100 is attached to each side of the frame rails 130a, 130b for supporting one or more energy storage modules 101. Due to the weight of the energy storage modules 101, the frame structure 100 is designed to withstand substantial durability loads, such as may occur in the X-direction, Y-direction and Z-direction.

As is depicted in Fig. 2, the frame structure comprises a plurality of energy storage supporting brackets 202. As exemplified in Fig. 2, the energy storage supporting brackets 202 may be arranged in a triangular shape, although other shapes are conceivable. The energy storage support brackets 202 are spaced apart from each other along the X-direction of the frame 130. Each of the energy storage support brackets 202 comprises a frame connecting surface 204 which is connected to the frame 130. According to an example, a plurality of openings (not shown) may be arranged through the frame connecting surface 204 for receiving fastening elements (not shown) such as screws, bolts or rivets, etc. The frame connecting surface 204 thus connects the energy storage supporting bracket 202 to the frame 130 by means of the fastening elements, such that the frame connecting surface 204 is arranged in abutment with the frame 130. The energy storage support brackets 202 thus supports the energy storage modules 101.

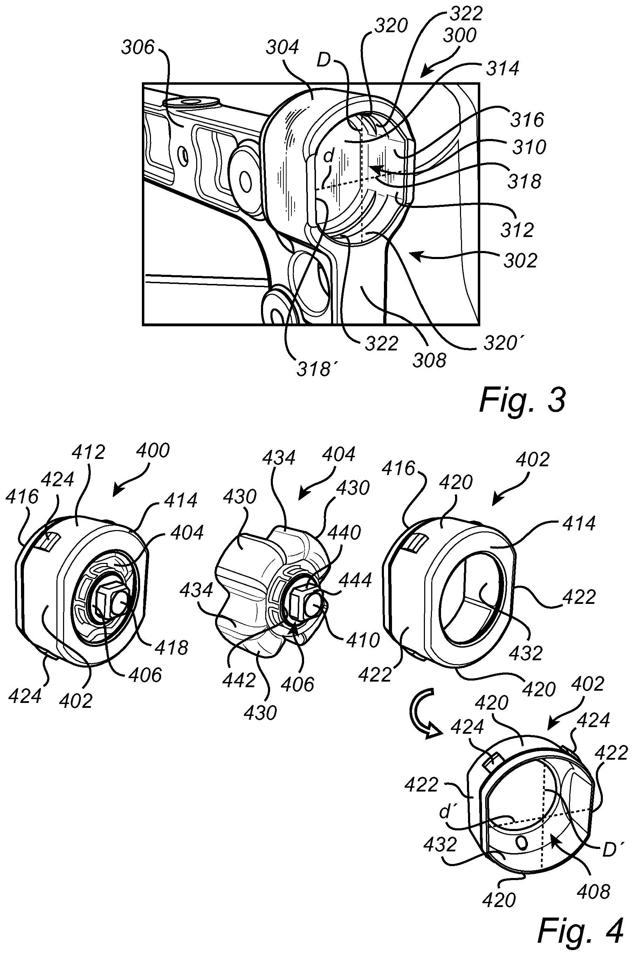

Furthermore, the frame structure 200 also comprises a vehicle bracket arrangement 300. As will be described in further detail below with reference to Figs. 3 - 6, the vehicle bracket arrangement 300 comprises a bracket 302. The bracket 302 is connected to the energy storage supporting bracket 202. In particular, the bracket 302 is connected to the energy storage supporting bracket 202 at an opposite position of the frame structure 200 compared to the frame connecting surface 204. Further, and as will also be described in detail below, the above described protection plate 120 is connected to the bracket 302 of the vehicle bracket arrangement 300. Accordingly, the energy storage modules are supported by the energy storage supporting brackets 202, which energy storage supporting brackets 202 are attached to the frame 130. The vehicle bracket arrangement 300 is in turn connected to the energy storage supporting brackets 202, whereby the protection plate 120 is connected to the bracket 302 of the vehicle bracket arrangement 300.

In order to describe the vehicle bracket arrangement 300 in further detail, reference is now made to Figs. 3-4 which illustrate exemplified details of the vehicle bracket arrangement 300. In particular, Fig. 3 is a detailed example of a vertically upper portion of the bracket 302 of the vehicle bracket arrangement 300, and Fig. 4 is an exemplified illustration of a bushing arrangement of the vehicle bracket arrangement, both in an assembled configuration and in exploded view.

With initial reference to Fig. 3, a first portion 304 of the bracket 302 is depicted. The first portion 304 is preferably an upper portion of the bracket 302. As depicted in Fig. 2, the bracket 302 also comprises a second portion 304', which is preferably a lower portion of the bracket 302. As can be seen, the bracket 302 comprises an elongated portion 308. The elongated portion 308 preferably extends between the first 304 and second 304' portions of the bracket. Preferably, the elongated portion 308 is a substantially vertical portion. The bracket 302 may also comprise a second elongated portion 306 extending from the first portion 304 in a direction towards the frame 130 of the vehicle 10.

The exemplified bracket 302 in Fig. 3 comprises a bracket cavity 310. The bracket cavity 310 is arranged in the first portion 304 of the bracket 302. Although not depicted, the bracket may also comprise a second bracket cavity arranged in the second portion 304' of the bracket 302. The following features described in relation to the bracket cavity 310 are equally applicable for the second bracket cavity. In a similar vein, the features of the busing arrangement described below are equally applicable for a second bushing arrangement (not shown) arranged in the second bracket cavity.

The bracket cavity 310 exemplified in Fig. 3 comprises an opening 312 and has a horizontal extension in a direction towards the frame 130 of the vehicle 10. The bracket cavity 310 comprises an inner wall 314 and a bracket abutment portion 316. The bracket abutment portion 316 is preferably a surface and exemplified as an oblong shaped portion. In detail, the oblong shaped portion comprises a pair of straight surface portions 318, 318' and a pair of semi-circular surface portions 320, 320'. A maximum distance D between the pair of semi-circular surface portions 320, 320' is preferably larger than a distance d between the pair of straight surface portions 318, 318'. Also, the pair of straight surface portions 318, 318' preferably extends vertically such that the oblong shaped portion is oblong in the vertical direction.

Furthermore, the bracket abutment portion 316 comprises at least one groove portion 322. In the example depicted in Fig. 3, the bracket abutment portion 316 comprises a pair of groove portion 322, each arranged in a respective one of the semi-circular surface portions 320, 320'. The groove portion 322 is preferably arranged at a distance from the opening 312, i.e. between the opening 312 and the inner wall 314. The groove portion 322 extends in an axial- and a radial direction of the respective semi-circular surface portions 320, 320'.

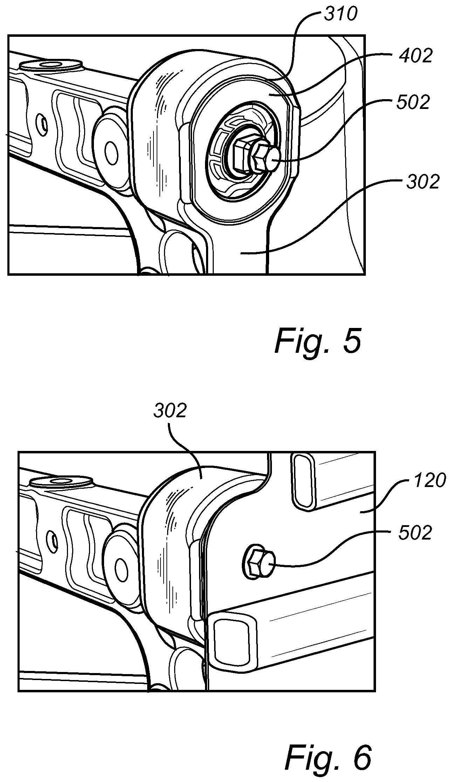

Reference is now made to Fig. 4 which illustrates a bushing arrangement 400 according to an example. As will be evident from the below description and illustration of Fig. 5, the bushing arrangement 400 is arranged to be positioned in the above-described bracket cavity 210. The bushing arrangement 400 comprises a first part 402, a second part 404 and a third part 406. The first 402, second 404 and third 406 parts are thus separate part, preferably made from different materials. According to an example, the first part 402 is made from a plastic material, the second part 404 is made from a rubber material and the third part 406 is made from a metallic material.

The first part 402 comprises a central cavity 408, wherein the second part 404 is arranged inside the central cavity 408 of the first part 402. Preferably, the second part 404 is prevented from any substantial axial, radial and rotation displacement relative to the first part 402. Further, the third part 406 is arranged in the second part 404. According to an example, the second part 404 may advantageously be vulcanized to the third part 406 to provide a substantially fixed interface between these two parts. Still further, and as will be described in further detail below, the third part 406 comprises an aperture 410 arranged to receive a fastener element. Also, the third part 406 may be arranged at a central position 418 of the second part 404.

Moreover, the first part 402 may be arranged as an oblong shaped portion, which shape preferably corresponds to the exemplified oblong shape of the bracket cavity 310. The first part 402 of the bushing arrangement 400 comprises a first abutment portion 412. The first abutment portion 412 is thus in the example an oblong shaped portion. The first abutment portion 412 is exemplified as an envelope surface of the first portion 402. The envelope surface extends circumferentially and between a first axial end 414 and a second axial end 416 of the first portion 402.

In a similar vein as the bracket cavity 310 described above, the oblong shaped portion of the first abutment portion 412 comprises a pair of semi-circular surfaces 420 and a pair of straight surfaces 422. Each of the straight surfaces 422 is arranged between the pair of semi-circular surfaces 420. Also, a maximum distance D' between the pair of semi-circular surfaces 420 is larger than a distance d' between the pair of straight surfaces 422.

Moreover, the first abutment portion 412 may comprise at least one protruding clip portion 424, in Fig. 4 exemplified as four protruding clip portions arranged the semi-circular surfaces 420 of the first abutment portion 412. When the bushing arrangement 400 is inserted into the bracket cavity 310 as depicted in Fig. 5, the protruding clip portions are arranged in the groove portion 322 of the bracket abutment portion 316 in the bracket cavity 310. A snap-fit connection may hereby be provided between the first part 402 and the bracket 302 which prevents the first part 402 from being axially displaceable from the bracket cavity 310 without the use of an external force.

With reference to the second part 404. As can be seen in Fig. 4, the second part 404 comprises a second abutment portion 430. When the second part 404 is inserted into the first part 402, the second abutment portion 430 is arranged in abutment with a surface 432 of the first part 402. In particular, the surface 432 of the first part 402 is an inner surface arranged in the central cavity 408 of the first part 402. The inner surface may be arranged in an oblong shape with a pair of semi-circular portions and a pair of straight portions. Also, and as illustrated, the second abutment portion 430 may be arranged on a radially protruding portion 434 of the second portion 404. In Fig. 3, the second portion 404 is exemplified as comprising four radially protruding portion 434 forming a four leaf clover shape. The abutment between the first and second abutment portions causes the second part 404 to be substantially stationary in a rotational direction within the first part 402.

Turning to the third part 406. As can be seen in Fig. 4, the third part 406 comprises a protruding portion 440. The protruding portion 440 protrudes from a side surface 442 of the second part 404. The protruding portion 440 extends in a direction away from the first part 402, in particular in a direction away from the inner wall 314 of the bracket cavity when the bushing arrangement 400 is positioned within the bracket cavity 310. Also, the protruding portion 440 comprises an end portion 444 having a chamfered shape.

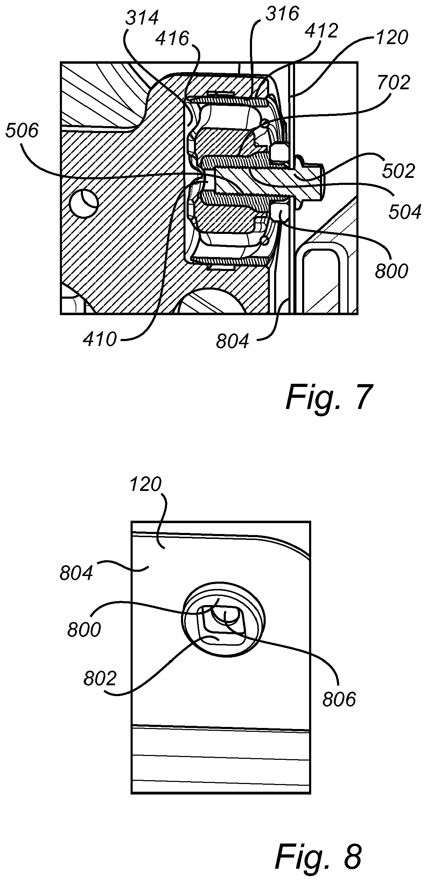

Turning now to Figs. 5 - 7, where Fig. 5 illustrates the bushing arrangement 400 inserted into the bracket cavity, Fig. 6 illustrates the protection plate connected to the bushing arrangement and Fig. 7 is a cross-sectional view of the interconnection of the bracket, the bushing arrangement and the protection plate.

As can be seen in Fig. 5, the first part 402 is arranged in the bracket cavity 310. In particular, the first part 402 is rotationally fixed to the bracket cavity 310, i.e. the first part 402 cannot rotate within the bracket cavity 310 due to the interaction between the first abutment portion of the first part 402 and the bracket abutment portion of the bracket cavity 310 described above. In further detail, the above described first abutment portion 412 of the first part 402 is arranged in abutment with the bracket abutment portion 316 of the bracket cavity 310. Furthermore, and as can be seen in Figs. 5 and 6, the above indicated fastener element 502 connects the protection plate 120 to the bracket 302. In detail, the fastener element 502 connects the protection plate 120 to the third part 406 of the bushing arrangement 400, whereby the third part 406 is connected to the second part 404, which second part 404 is arranged in the first part 402 and the first part 402 is arranged in the bracket cavity 310 of the bracket 302. As depicted in Fig. 7, the fastener element 502 may be a threaded fastener element, such as a screw provided with external threads 504 arranged in meshed connection with internal threads 506 of the aperture 410 of the third part 406. As also illustrated in Fig. 7, the aperture 410 of the third part 406 may extend into the second part 404 in the axial direction.

Moreover, Fig. 7 also in yet further detail illustrates that the third part 406 is arranged in the second part 404. Preferably, and as depicted, the second part 404 comprises an opening 702, such as a through hole, in which the third part 406 is arranged. As also depicted in Fig. 7, the second axial end 416 of the first part 402 is arranged at the inner wall 314 of the bracket cavity 310 when the bushing arrangement 400 is inserted into the bracket cavity 310.

Turning now to Fig. 8 in combination with Fig. 7. Fig. 8 is an exemplary illustration of a guiding element connected to the protection plate according to an example. Thus, the vehicle bracket arrangement 300 may comprise a guiding element 800. As exemplified in Fig. 8, the guiding element 800 is arranged at an inner surface 804 of the protection plate 120, which inner surface 804 faces the frame 130 of the vehicle 10. The guiding element 800 is hollow and arranged at a through hole 806 of the protection plate 120. When the protection plate 120 is connected to the bushing arrangement 400 as depicted in Fig. 7,the guiding element 800 at least partly enclose the protruding portion of the third part 806. An inner surface 802 of the guiding element 800 is preferably chamfered to meet the chamfered shape of the end portion 444 of the protruding portion 440 of the third part 406.

### EXAMPLE LIST

Example 1: A vehicle bracket arrangement for suspending a protection plate for an energy storage system, the vehicle bracket arrangement comprising a bracket comprising a bracket cavity, and a bushing arrangement comprising a first part arranged in, and rotationally fixed to, the bracket cavity, the first part comprising a central cavity, a second part arranged in the central cavity of the first part, and a third part arranged in the second part, wherein the third part comprises an aperture configured to receive a fastener element for connecting a protection plate to the bracket.

Example 2: The vehicle bracket arrangement of example 1, wherein the first part of the bushing arrangement comprises a first abutment portion arranged in abutment with a bracket abutment portion of the bracket cavity.

Example 3: The vehicle bracket arrangement of example 2, wherein the first abutment portion and the bracket abutment portion is a respective oblong shaped portion.

Example 4: The vehicle bracket arrangement of example 3, wherein the oblong shaped portion of the first abutment portion comprises a pair of semi-circular surfaces and a pair of straight surfaces each arranged between the pair of semi-circular surfaces.

Example 5: The vehicle bracket arrangement of example 4, wherein a maximum distance between the pair of semi-circular surfaces is larger than a distance between the pair of straight surfaces.

Example 6: The vehicle bracket arrangement of any one of examples 2-5, wherein the first abutment portion comprises at least one protruding clip portion arranged in a groove portion of the bracket abutment portion.

Example 7: The vehicle bracket arrangement of example 6 when dependent on any one of examples 4 or 5, wherein the at least one protruding clip portion is arranged on at least one of the semi-circular surfaces of the first abutment portion.

Example 8: The vehicle bracket arrangement of any one of the preceding examples, wherein the third part comprises a protruding portion, the protruding portion protrudes from a side surface of the second part in a direction away from the first part.

Example 9: The vehicle bracket arrangement of example 8, wherein the protruding portion of the third part comprises an end portion having a chamfered shape.

Example 10: The vehicle bracket arrangement of any one of examples 8 or 9, wherein the vehicle bracket arrangement further comprises a guiding element connectable to the protection plate, wherein the guiding element is configured to at least partly enclose the protruding portion of the third part when the protection plate is connected to the bracket.

Example 11: The vehicle bracket arrangement of any one of the preceding examples, wherein the third part is arranged in the second part at a central position of the second part.

Example 12: The vehicle bracket arrangement of any one of the preceding examples, wherein the second part is vulcanized to the third part.

Example 13: The vehicle bracket arrangement of any one of the preceding examples, wherein the first, second and third parts are made from different material.

Example 14: The vehicle bracket arrangement of example 13, wherein the first part is made from a plastic material, the second part is made from a rubber material and the third part is made from a metallic material.

Example 15: The vehicle bracket arrangement of any one of the preceding examples, wherein the aperture of the third part comprises a threaded portion to which a threaded fastener element is connectable.

Example 16: The vehicle bracket arrangement of example 1, wherein the bracket comprises an elongated portion extending between a first end portion and a second end portion, wherein the bracket cavity is arranged at the first end portion of the elongated portion.

Example 17: The vehicle bracket arrangement of example 16, wherein the bracket further comprises a second bracket cavity arranged at the second end portion, wherein a second bushing arrangement is arranged in the second bracket cavity.

Example 18: The vehicle bracket arrangement of any one of the preceding examples, wherein the second part comprises a second abutment portion arranged in abutment with a surface of the first part.

Example 19: The vehicle bracket arrangement of example 18, wherein the second abutment portion is arranged on a plurality of radially protruding portions of the second part.

Example 20: A frame structure for suspending an energy storage system of a vehicle, the frame structure comprising an energy storage supporting bracket configured to suspend an energy storage system, the energy storage supporting bracket comprises a frame connecting surface connectable to a frame of the vehicle, and a vehicle bracket arrangement according to any one of the preceding examples, wherein the bracket is connected to the energy storage supporting bracket at an opposite position of the frame structure compared to the frame connecting surface.

Example 21: The frame structure of example 20, wherein the third part of the bushing arrangement protrudes in a direction opposite to a direction of a normal vector of the frame connecting surface.

Example 22: The frame structure of any one of examples 20 or 21, wherein the frame structure further comprises a protection plate and a fastener element connecting the protection plate to the bracket via the third part of the bushing arrangement.

Example 23: A vehicle, comprising a vehicle bracket arrangement according to any one of examples 1 - 19 or a frame structure according to any one of examples 20 - 22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle bracket arrangement for suspending a protection plate for an energy storage system, the vehicle bracket arrangement comprising:
- a bracket comprising a bracket cavity, and
- a bushing arrangement comprising a first part arranged in, and rotationally fixed to, the bracket cavity, the first part comprising a central cavity, a second part arranged in the central cavity of the first part, and a third part arranged in the second part,
wherein the third part comprises an aperture configured to receive a fastener element for connecting a protection plate to the bracket.

2. The vehicle bracket arrangement of claim 1, wherein the first part of the bushing arrangement comprises a first abutment portion arranged in abutment with a bracket abutment portion of the bracket cavity.

3. The vehicle bracket arrangement of claim 2, wherein the first abutment portion and the bracket abutment portion is a respective oblong shaped portion.

4. The vehicle bracket arrangement of claim 3, wherein the oblong shaped portion of the first abutment portion comprises a pair of semi-circular surfaces and a pair of straight surfaces each arranged between the pair of semi-circular surfaces.

5. The vehicle bracket arrangement of any one of claims 2-4, wherein the first abutment portion comprises at least one protruding clip portion arranged in a groove portion of the bracket abutment portion.

6. The vehicle bracket arrangement of any one of the preceding claims, wherein the third part comprises a protruding portion, the protruding portion protrudes from a side surface of the second part in a direction away from the first part.

7. The vehicle bracket arrangement of claim 6, wherein the vehicle bracket arrangement further comprises a guiding element connectable to the protection plate, wherein the guiding element is configured to at least partly enclose the protruding portion of the third part when the protection plate is connected to the bracket.

8. The vehicle bracket arrangement of any one of the preceding claims, wherein the second part is vulcanized to the third part.

9. The vehicle bracket arrangement of any one of the preceding claims, wherein the first part is made from a plastic material, the second part is made from a rubber material and the third part is made from a metallic material.

10. The vehicle bracket arrangement of any one of the preceding claims, wherein the bracket comprises an elongated portion extending between a first end portion and a second end portion, wherein the bracket cavity is arranged at the first end portion of the elongated portion.

11. The vehicle bracket arrangement of any one of the preceding claims, wherein the second part comprises a second abutment portion arranged in abutment with a surface of the first part.

12. The vehicle bracket arrangement of claim 11, wherein the second abutment portion is arranged on a plurality of radially protruding portions of the second part.

13. A frame structure for suspending an energy storage system of a vehicle, the frame structure comprising an energy storage supporting bracket configured to suspend an energy storage system, the energy storage supporting bracket comprises a frame connecting surface connectable to a frame of the vehicle, and a vehicle bracket arrangement according to any one of the preceding claims, wherein the bracket is connected to the energy storage supporting bracket at an opposite position of the frame structure compared to the frame connecting surface.

14. The frame structure of claim 13, wherein the frame structure further comprises a protection plate and a fastener element connecting the protection plate to the bracket via the third part of the bushing arrangement.

15. A vehicle, comprising a vehicle bracket arrangement according to any one of claims 1 - 12 or a frame structure according to any one of claims 13 - 14.
